(19) **Europäisches Patentamt**
**European Patent Office**
**Office européen des brevets**

(11) **EP 1 850 627 B1**

(12) **FASCICULE DE BREVET EUROPEEN**

(45) Date de publication et mention
de la délivrance du brevet:
**04.01.2012 Bulletin 2012/01**

(51) Int Cl.:
***H04W 64/00*** *(2009.01)*

(21) Numéro de dépôt: **07107060.1**

(22) Date de dépôt: **26.04.2007**

(54) **Détermination d'une zone de localisation d'un terminal par rapport à une région géographique déterminée**

Bestimmung einer Lokalisierungszone eines Endgeräts bezüglich einer bestimmten geographischen Region

Determining the location of a terminal in relation to a given geographical region

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **28.04.2006 FR 0651525**

(43) Date de publication de la demande:
**31.10.2007 Bulletin 2007/44**

(73) Titulaire: **FRANCE TELECOM**
**75015 Paris (FR)**

(72) Inventeurs:
• **Francfort, Stanislas**
**92130, ISSY LES MOULINEAUX (FR)**
• **Ansel, Pierre**
**75013, PARIS (FR)**

(74) Mandataire: **Joly, Jean-Jacques et al**
**Cabinet Beau de Loménie**
**158, rue de l'Université**
**75340 Paris cedex 07 (FR)**

(56) Documents cités:
WO-A1-99/13662          US-A1- 2004 152 470
US-A1- 2005 124 354     US-A1- 2006 075 131

**Description**

<u>Domaine technique de l'invention</u>

L'invention se rapporte au domaine des communications sans fil et en particulier à la localisation d'un terminal communicant selon un protocole de communication sans fil du type Wi-Fi.

<u>Arrière-plan de l'invention</u>

Actuellement, des protocoles de communication sans fil du type Wi-Fi permettent à des terminaux électroniques ou informatiques d'échanger des informations. Par exemple, un ordinateur portable ou client compatible Wi-Fi peut se connecter à une borne d'accès Wi-Fi, et à la suite d'un échange de données, cette borne d'accès servira de passerelle entre l'ordinateur portable et internet.

Cependant, un administrateur de la borne d'accès sans fil peut vouloir avoir une connaissance de l'endroit géographique où se situe le client faisant une requête de connexion. A titre d'exemple, l'accès à Internet peut être limité aux ordinateurs se situant dans une zone géographique précise, par exemple à l'intérieur d'une entreprise, mais pas à l'extérieure de celle-ci.

Il est connu, par exemple sur des réseaux GSM, une technique de localisation d'un terminal par une méthode de triangulation. Cette méthode nécessite que le signal émis par le terminal soit reçu par au moins trois sondes. Chaque sonde reçoit un signal de la part du terminal et selon la puissance du signal reçu, la sonde en déduit une distance qui le sépare de ce terminal. Ensuite, on cherche à résoudre un système d'équations correspondant à une intersection entre trois cercles pour déduire une zone de localisation du terminal.

Cependant, la méthode de triangulation nécessite de connaître la puissance d'émission du terminal afin de la comparer aux puissances reçues par les sondes pour pouvoir déduire les distances. Or, il n'est pas toujours possible de connaître la puissance émise par un terminal surtout dans le cas des réseaux sans fil du type Wi-Fi.

En outre, la modélisation de la propagation des ondes radios utilisée par la méthode de triangulation est une modélisation approximative entachée d'erreurs qui empêche de résoudre le système d'équation sans un traitement préalable.

Par ailleurs, il est connu une autre méthode de localisation d'un terminal, dite localisation directionnelle qui nécessite au moins deux sondes. Selon cette méthode, chaque sonde reçoit un signal émis par le terminal et en déduit la direction de ce signal. Dans ce cas, la position du terminal est déterminée par l'intersection entre les deux directions mesurées par les deux sondes.

Cependant, la détermination ou la connaissance de la direction de provenance du signal émis par le terminal n'est pas toujours possible surtout dans le cas des réseaux sans fil du type Wi-Fi.

D'autres méthodes de localisation d'un terminal sont connues. Par exemple, le document par P.Bahl and V.Padmanabhan intitulé « RADAR : An In-Buiding RF-based User Location and Tracking System », (IEEE INFOCOM00, 2000), permet de localiser un équipement selon un modèle d'atténuation de puissance et une construction préalable d'une carte en trois dimensions des puissances reçues par des sondes chargées de localiser l'équipement. Suivant cette méthode, on cherche un meilleur couplage entre des données de puissance recueillies par ces sondes.

L'inconvénient de cette méthode est qu'elle nécessite une base de donnée alimentée au préalable et comportant une connaissance des puissances reçues par les sondes.

Le document US 2004/0152470 décrit un procédé d'estimation de la position d'un terminal radio adapté à des systèmes existants. Le procédé repose sur le fait que l'intensité d'un signal provenant d'un transmetteur est différente dans certaines positions. La position d'un terminal radio peut être ainsi estimée par comparaison de l'intensité de signal par rapport à une carte ou une base de données mettant en corrélation des positions et des intensités de signal.

Le document US 2005/124354 décrit un procédé d'estimation de l'emplacement d'un terminal sans fil se trouvant au sein d'une structure. Un modèle de propagation de signaux de fréquence radio intérieur est utilisé pour corriger des prédictions de résistance de signal obtenues à partir d'un modèle de propagation de signal de fréquence radio extérieur.

Le document WO 99/13662 divulgue un procédé de détermination d'une zone de localisation d'un terminal utilisant la différence entre les différences de niveau de puissance effectivement mesurés et les différences de niveau de puissance calculés.

Le document US 2006/0075131 décrit l'utilisation d'une grille comprenant des alternations de signal permettant de déterminer la position d'une entité lorsque sa puissance de transmission est inconnue.

<u>Objet et résumé de l'invention</u>

L'invention concerne un procédé de détermination d'une zone de localisation d'un terminal par rapport à une région géographique déterminée, ledit terminal étant apte à communiquer sans fil, procédé dans lequel :

- on représente ladite région géographique déterminée par un ensemble de points de référence,
- on localise au moins deux sondes, et
- on associe à chacun desdits points de référence au moins des première et deuxième atténuations de puissance correspondant auxdites au moins deux sondes,

pour un terminal émettant un signal capté par lesdites au moins deux sondes :

- on mesure par lesdites au moins deux sondes au moins des première et deuxième puissances de réception correspondant audit signal émis par ledit terminal, et
- on détermine, parmi l'ensemble de points de référence, au moins un sous-ensemble de points, dit sous-ensemble de points de localisation, proches du terminal, au moyen de puissances relatives, une puissance relative associée à un point de référence étant égale à la différence entre lesdites au moins première et deuxième puissances de réception plus la différence entre lesdites au moins première et deuxième atténuations de puissance, et en ce qu'on détermine ledit au moins sous-ensemble de points de localisation en minimisant lesdites puissances relatives, ledit sous-ensemble de points de localisation définissant ladite zone de localisation du terminal,

et pour trouver ledit au moins sous-ensemble de points de localisation:

- on applique une fonction non linéaire sur lesdites puissances relatives pour former des puissances relatives pondérés,
- on calcule un écart relatif par rapport à une valeur minimale desdites puissances relatives pondérés, et
- on compare ledit écart avec un seuil de précision déterminé pour trouver ledit au moins sous-ensemble de points de localisation définissant ladite zone de localisation du terminal.

Ainsi, on peut localiser le terminal de manière simple et avec un maximum de vraisemblance sans connaître la puissance d'émission du terminal. De plus, l'obtention des atténuations de puissance peut être faite à la volée ou de manière préalable. De même, la puissance relative peut être facilement calculée en fonction des puissances reçues et d'une modélisation d'atténuation de puissance qui peut être modélisée au préalable ou en temps réel.

En outre, la fonction non linéaire qui peut être une fonction sous-linéaire ou sur-linéaire permet d'augmenter la précision de la localisation du terminal en accentuant la séparation entre les écarts proches de zéro et ceux plus éloignés de zéro.

Selon une particularité de l'invention, au moins une partie desdites au moins première et deuxième atténuations de puissance peut être obtenue par une mesure physique.

Ainsi, les atténuations de puissance peuvent être mesurées de manière simple et empirique à l'aide d'un appareil émettant à une puissance connue. En outre, les atténuations de puissance peuvent être issues d'une mesure physique et d'un calcul.

Selon un mode de réalisation particulier, l'atténuation de puissance entre un point de référence $M_\alpha$ et une sonde déterminée parmi lesdites au moins deux sondes ayant une position Si est calculée en fonction du milieu k traversé, d'un nombre N de milieux rencontrés, d'une longueur dk que doit parcourir une onde en ligne droite dans le milieu k pour joindre ladite sonde depuis ledit point de référence $M_\alpha$, d'un facteur d'atténuation Ak du milieu k, selon l'équation suivante :

$$A(Si, M_\alpha) = \sum_{k=1}^{N} 10 * Ak * \log(dk).$$

Selon une variante, l'atténuation de puissance entre un point de référence $M_\alpha$ et une sonde déterminée parmi lesdites au moins deux sondes ayant une position Si est calculée en fonction d'une distance d entre ladite sonde déterminée et ledit point de référence, d'un facteur d'atténuation de l'air libre Aair, d'un nombre N de bâtiments traversés, d'un indice du bâtiment k, d'une longueur dk que doit parcourir une onde en ligne droite dans ledit bâtiment pour joindre ladite sonde déterminée depuis ledit point de référence, d'un facteur d'atténuation d'un mur Amur, d'une densité linéique $\mu$ d'un mur dans d'un bâtiment $k_{bat}$, selon une équation d'approximation suivante :

$$A(Si, M_\alpha) \approx Aair \log(d) - \mu Amur(\sum_{k=1}^{Nb} dk).$$

Le procédé vise le cas dans lequel on localise au moins trois sondes. Dans ce cas, les puissances de réception mesurées par lesdites au moins trois sondes sont associées entre elles deux à deux pour former un ensemble de couples de première et deuxième puissances de réception dont au moins une partie est retenue pour déterminer une pluralité de sous-ensembles de points de localisation.

Ainsi, la précision de la localisation du terminal peut être augmentée davantage. De plus, la surface de la région géographique déterminée peut être augmentée.

Avantageusement, pour trouver un unique sous-ensemble de points de localisation:

- on calcule une distance relative entre chacun desdits points de référence et chacun de ladite pluralité de sous-ensembles de points de localisation pour former une pluralité de distances relatives correspondant audit ensemble de points de référence et à ladite pluralité de sous-ensembles de points de localisation,
- on calcule pour chacun desdits points de référence une distance globale en fonction de ladite pluralité de distances relatives entre ledit point de référence et un ensemble formé par ladite pluralité de sous-ensembles de points de localisation pour former une pluralité de distances globales correspondant audit ensemble de points de référence,
- on calcule un écart de distance par rapport à une distance globale minimale dudit ensemble de distances globales, et
- on compare ledit écart de distance avec une valeur de résolution déterminée pour trouver ledit unique sous-ensemble de points de localisation définissant ladite zone de localisation du terminal.

Ainsi, au cas où le nombre de sondes est supérieur à deux, la localisation du terminal peut être déterminée avec une très grande précision selon un calcul simple et rapide.

La localisation d'une nouvelle sonde insérée dans ladite région géographique déterminée peut être réalisée par lesdites au moins première et deuxième sondes.

Ainsi, il n'est pas nécessaire de mesurer et relever exactement la position de toute nouvelle sonde dans la région géographique déterminée car cette position peut être localisée automatiquement par les sondes déjà en présence.

Ladite région géographique peut comporter un site comprenant au moins une borne d'accès Wi-Fi et ledit terminal est apte à communiquer selon un protocole de type Wi-Fi.

L'invention vise aussi un système de détermination d'une zone de localisation d'un terminal par rapport à une région géographique déterminée, ledit terminal étant apte à communiquer sans fil, le système comportant :

- des moyens de représentation pour représenter ladite région géographique déterminée par un ensemble de points de référence,
- des moyens de localisation pour localiser au moins deux sondes, et
- des moyens d'association pour associer à chacun desdits points de référence au moins des première et deuxième atténuations de puissance correspondant auxdites au moins deux sondes,
- des moyens de mesure pour mesurer au moins des première et deuxième puissances de réception correspondant à un signal émis par ledit terminal et capté par lesdites au moins deux sondes, et
- des moyens de détermination pour déterminer, parmi l'ensemble de points de référence, au moins un sous-ensemble de points, dit sous-ensemble de points de localisation, proches du terminal, au moyen de puissances relatives calculées à partir desdites au moins première et deuxième puissances de réception et desdites au moins première et deuxième atténuations de puissance associées à chacun desdits points de référence, ledit sous-ensemble de points de localisation définissant ladite zone de localisation du terminal,
- des moyens d'application d'une fonction non linéaire sur lesdites puissances relatives pour former des puissances relatives pondérées,
- des moyens de calcul d'un écart relatif par rapport à une valeur minimale desdites puissances relatives pondérées, et
- des moyens de comparaison dudit écart avec un seuil de précision déterminé pour trouver ledit au moins sous-ensemble de points de localisation définissant ladite zone de localisation du terminal.

L'invention vise également un programme d'ordinateur téléchargeable depuis un réseau de communication et/ou stocké sur un support lisible par ordinateur et/ou exécutable par une puce électronique, le programme comprenant des instructions de codes pour l'exécution des étapes du procédé de détermination d'une zone de localisation d'un terminal par rapport à une région géographique déterminée selon au moins l'une des caractéristiques du procédé selon l'invention, lorsqu'il est exécuté sur un ordinateur.

Brève description des dessins

D'autres particularités et avantages de l'invention ressortiront à la lecture de la description faite, ci-après, à titre indicatif mais non limitatif, en référence aux dessins annexés, sur lesquels :

- la figure 1 illustre un exemple très schématique d'une région géographique comportant une pluralité de sondes, selon l'invention ;
- la figure 2 illustre un exemple très schématique d'un système de détermination de la zone de localisation d'un terminal par rapport à la région géographique de la figure 1 ; et
- la figure 3 illustre des trajets d'ondes entre des points de référence de la région géographique de la figure 1.

Description détaillée de modes de réalisation

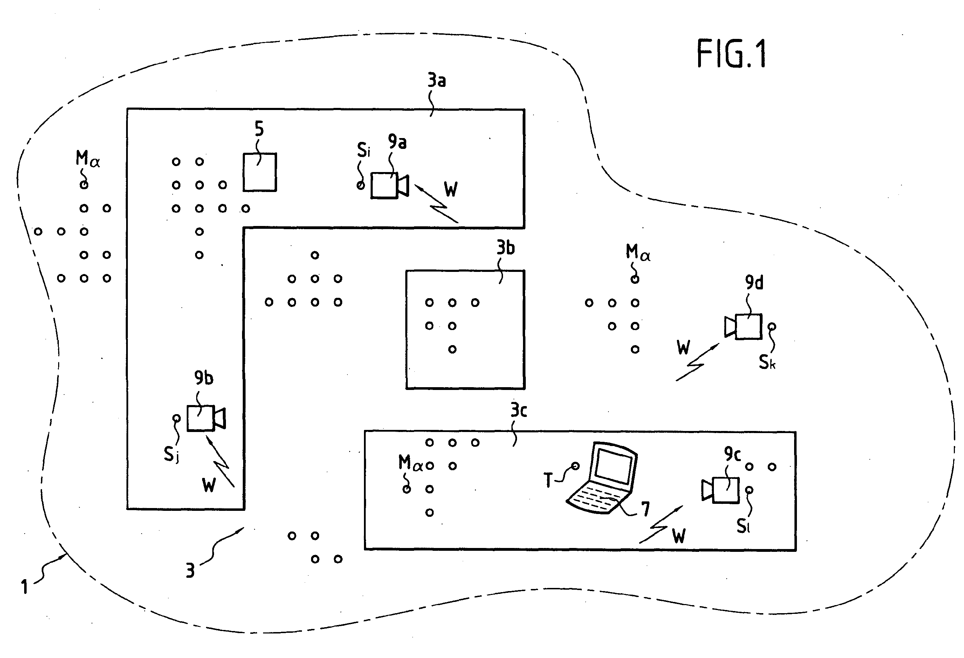

La figure 1 illustre de manière schématique une région géographique 1 déterminée qui peut comporter un site 3 formé d'un ou de plusieurs bâtiments 3a, 3b et 3c. On notera que le site 3 peut comprendre au moins une borne d'accès sans fil 5 (par exemple de type Wi-Fi) permettant à un terminal 7 (par exemple un ordinateur portable, un téléphone mobile, etc.) de communiquer sans fil selon par exemple un protocole de type Wi-Fi.

Conformément à l'invention, la région géographique 1 déterminée peut comporter une pluralité de sondes 9a à 9d aptes à capter des signaux W émis par un ou plusieurs terminaux 7 situés dans ou au voisinage de la région géographique 1.

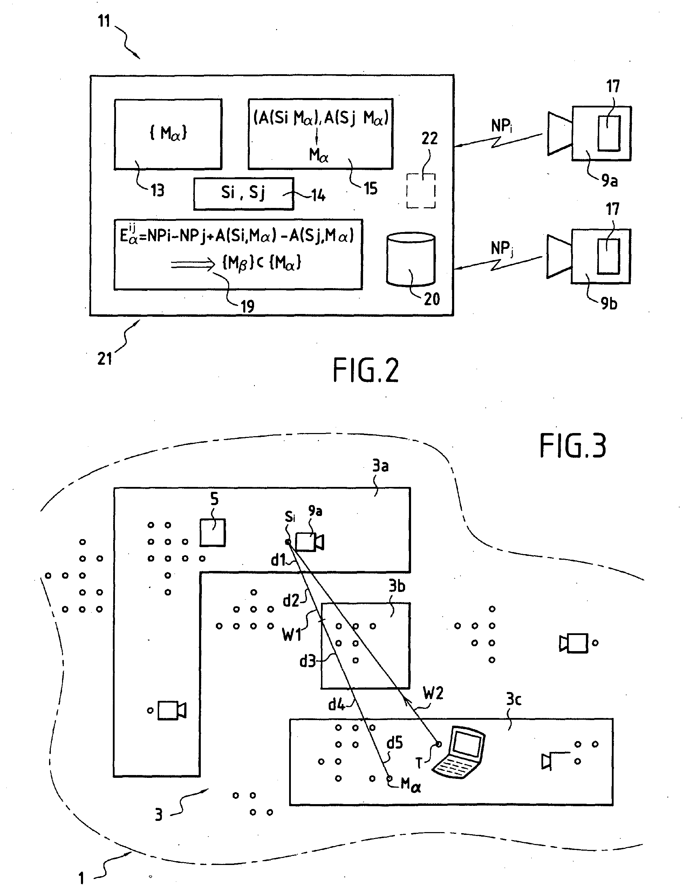

La figure 2 illustre un exemple très schématique d'un système 11 de détermination de la zone de localisation d'un terminal 7 par rapport à la région géographique 1 déterminée.

Ce système 11 comprend des moyens de représentation 13, des moyens de localisation 14, des moyens d'association 15, des moyens de mesure 17, et des moyens de détermination 19.

Selon un mode particulier de réalisation de l'invention, les moyens de représentation 13, les moyens de localisation 14, les moyens d'association 15, et les moyens de détermination 19 sont compris dans un centre de calcul 21 tandis que les moyens de mesure 17 peuvent être compris dans les sondes 9a à 9d. En variante, le centre de calcul 21 peut être compris dans une des sondes 9a à 9d.

Afin de déterminer la zone de localisation d'un terminal 7 communiquant sans fil, on représente la région géographique 1 déterminée par un ensemble de points de référence $\{M_\alpha\}$.

En effet, les moyens de représentation 13 permettent de repérer la zone de localisation du terminal 7 par rapport à la région géographique 1 déterminée en définissant par exemple chaque point de référence $M_\alpha$ par un couple de coordonnées dans un plan (x, y) ou éventuellement par trois coordonnés dans un espace (x, y, z).

A titre d'exemple, la représentation de la région géographique 1 déterminée peut être réalisée par l'établissement d'une carte de cette région et ensuite par la discrétisation de cette carte en une pluralité de points élémentaires selon une précision déterminée. Le choix de la précision des points élémentaires ou pixels permet de déterminer la précision de la localisation, et par conséquent la rapidité et la précision de résolution des calculs.

Avantageusement, on peut sélectionner une partie de la pluralité de points élémentaires pour former l'ensemble de points de référence $\{M_\alpha\}$.

Cet ensemble de points de référence $\{M_\alpha\}$ peut être stocké dans une base de données 20 comprise par exemple dans le centre de calcul 21 du système 11 de détermination de la zone de localisation.

Par ailleurs, on localise la position d'au moins deux sondes 9a et 9b dans la région géographique 1 déterminée. En effet, les moyens de localisation 14 permettent de localiser la position de chaque sonde 9a à 9d par un point correspondant parmi l'ensemble de points de référence $\{M_\alpha\}$. Selon l'exemple de la figure 1, les sondes 9a à 9d sont localisées par les points de référence Si, Sj, Sk, et Si respectivement.

En outre, on associe à chacun des points de référence $M_\alpha$ au moins des première et deuxième atténuations de puissance $A(Si, M_\alpha)$ et $A(Sj, M_\alpha)$ correspondant à ces deux sondes 9a et 9b localisées par les points de référence Si et Sj. Ainsi, les moyens d'association 15 attribuent à chaque point $M_\alpha$, des atténuations de puissance en fonction de la localisation d'au moins deux sondes.

On notera que l'association des atténuations de puissance $A(Si, M_\alpha)$ et $A(Sj, M_\alpha)$ peut être réalisée et stockée dans la base de données 20 au préalable afin de l'utiliser lors de la détermination de la zone de localisation d'un terminal 7.

En variante, l'association des atténuations de puissance $A(Si, M_\alpha)$ et $A(Sj, M_\alpha)$ peut être faite à la volée et en temps réel permettant ainsi d'éviter la gestion d'une base de données.

Selon un mode particulier de réalisation, les atténuations de puissance $A(Si, M_\alpha)$ et $A(Sj, M_\alpha)$ peuvent être obtenues par un modèle de propagation et d'atténuation.

A titre d'exemple, une atténuation de puissance entre un point de référence $M_\alpha$ et une sonde déterminé 9a à la position Si peut être calculée en fonction du milieu traversé (symbolisé par k), de nombre N de milieux rencontrés, d'une longueur (symbolisée par dk) que doit parcourir une onde en ligne droite dans le milieu k pour joindre la sonde déterminée 9a depuis le point de référence $M_\alpha$, et d'un facteur d'atténuation (symbolisé par Ak) du milieu k, selon l'équation suivante :

$$A(Si, M_\alpha) = \sum_{k=1}^{N} 10 * Ak * \log(dk),$$

où log est le logarithme népérien.

La figure 3 illustre de manière schématique un exemple d'un trajet d'une onde W1 entre un point de référence $M_\alpha$ et la position Si de la sonde 9a. Selon cet exemple, le trajet de l'onde W1 traverse cinq milieux (N=5) de longueurs consécutives d1, d2, d3, d4 et d5.

On notera que la valeur Ak peut être déterminée expérimentalement ou calculée de manière approchée. La valeur Ak dépend du milieu le constituant (air libre, béton, verre, métal,...). Typiquement, le facteur d'atténuation varie en fonction du milieu entre environ 2 et 6.

Avantageusement, afin de simplifier les calculs, l'équation ci-dessus peut être approchée par l'équation approximative suivante :

$$A(Si, M_\alpha) \approx Aair \log(d) - \mu Amur\left(\sum_{k=1}^{Nb} dk\right).$$

Ainsi, l'atténuation de puissance entre le point de référence $M_\alpha$ et la position Si est calculée en fonction de la distance d (où d=d1+...+d5) entre la sonde déterminée 9a et le point de référence $M_\alpha$, d'un facteur d'atténuation de l'air libre (symbolisé par Aair), d'un nombre Nb de bâtiments traversés, d'un indice du bâtiment k, d'une longueur dk que doit parcourir une onde en ligne droite dans le bâtiment k pour joindre la sonde déterminée 9a depuis le point de référence $M_\alpha$, d'un facteur d'atténuation d'un mur (symbolisé par Amur), et d'une densité linéique (symbolisé par $\mu$) d'un mur d'un bâtiment k.

A titre d'exemple, la valeur du facteur d'atténuation de l'air libre est égale à environ 3,5 (Aair=3,5), la valeur du facteur d'atténuation d'un mur peut être égale à environ 13 (Amur=13), cela dépend fortement du type de matériaux considéré. La densité linéique de murs peut être fixée à environ 0,12 ($\mu$ =0,12). En effet, sur un chemin de longueur donné, le produit de cette densité linéique par la longueur nous donne le nombre de murs moyen traversés. A titre d'exemple, une densité linéique de 0,12 signifie que l'on traverse environ un mur tous les 8 mètres.

Selon un autre mode particulier de réalisation, les atténuations de puissance A(Si, $M_\alpha$) et A(Sj, $M_\alpha$) peuvent être obtenues par une mesure physique.

En effet, on peut mesurer de façon empirique les atténuations, par exemple en faisant une corrélation entre des positions connues d'un appareil émettant à une puissance connue et les puissances reçues par les sondes 9a à 9d. Il est ainsi possible de recueillir un échantillon de données mesurant les atténuations sur la carte discrétisée de la région géographique 1. Si ce nombre de mesure est insuffisant pour associer une atténuation à tous les points $M_\alpha$ de la carte discrétisée, il est possible de compléter ces mesures par une méthode d'interpolation ou grâce au modèle de propagation et d'atténuation décrit précédemment.

Alors, pour pouvoir déterminer la zone de localisation d'un terminal 7 émettant un signal capté par les deux sondes, on mesure des première et deuxième puissances de réception NPi et NPj. L'exemple de la figure 3 montre un trajet d'une onde W2 traversant les bâtiments 3a, 3b et 3c entre une position T à déterminer du terminal 7 et la position Si de la sonde Sa.

En effet, les moyens de mesure 17 des deux sondes 9a et 9b localisées en Si et Sj mesurent les puissances de réception NPi et NPj correspondant au signal (par exemple W2) émis par le terminal 7 et capté respectivement par les deux sondes 9a et 9b. Ensuite, les deux sondes transmettent les puissances de réception NPi et NPj au centre de calcul 21 pour que ce dernier détermine la position du terminal 7.

Eventuellement, si le centre de calcul 21 reçoit plusieurs puissances de réception par sonde, celui-ci les filtre par un filtre de puissance 22 (représenté en pointillé sur le dessin) afin de ne garder pour chaque sonde qu'un seul niveau de puissance jugé pertinent que l'on note NPi pour la sonde 9a à la position Si et NPj pour la sonde 9b à la position Sj. A titre d'exemple, le filtre de puissance 22 est un filtre qui réalise la moyenne des puissances de réception mesurées par chaque sonde 9a à 9d. En variante, le filtre de puissance 22 peut être un filtre qui sélectionne le maximum de ces puissances de réception ou un tout autre filtre pertinent.

Ensuite, les moyens de détermination 19 déterminent, parmi l'ensemble de points de référence {$M_\alpha$}, un sous-ensemble de points, dit sous-ensemble de points de localisation {$M_\beta$}, proches de la position T du terminal 7, au moyen de puissances relatives $E^{ij}$ calculées à partir des première et deuxième puissances de réception NPi et NPj et des première et deuxième atténuations de puissance A(Si, $M_\alpha$) et A(Sj, $M_\alpha$) associées à chacun des points de référence $M_\alpha$. La zone de localisation du terminal 7 est ainsi définie par ce sous-ensemble de points de localisation {$M_\beta$}.

A titre d'exemple, pour chaque point $M_\alpha$ de l'ensemble de points de référence {$M_\alpha$}, les moyens de détermination 19 calculent une puissance relative $E^{ij}_\alpha$ égale à la différence entre les première et deuxième puissances de réception NPi et NPj, plus, la différence entre les première et deuxième atténuations de puissance A(Si, M$_\alpha$) et A(Sj, M$_\alpha$) selon l'équation suivante :

$$E^{ij}{}_\alpha = NPi - NPj + A(Si, M_\alpha) - A(Sj, M_\alpha).$$

Or, lorsque le point de référence M$_\alpha$ correspond à la position T du terminal (c'est-à-dire M$_\alpha$=T), la valeur de la puissance relative E$^{ij}{}_\alpha$ tend vers zéro, c'est-à-dire que NPi - NPj + A(Si, T) - A(Sj, T)=0, où A(Si, T) (respectivement A(Sj, T)) est l'atténuation entre la sonde à la position Si (respectivement Sj) et le terminal 7 à la position T. Avantageusement, on notera que cette équation ne dépend pas des puissances d'émission des ondes radios du terminal 7.

Ainsi, la localisation du terminal 7 nécessite la détermination du sous-ensemble de points de localisation {M$_\beta$} qui annule ou quasiment annule la valeur des puissances relatives E$^{ij}$.

Les moyens de détermination 19 peuvent alors déterminer ce sous-ensemble de points de localisation {M$_\beta$} en minimisant les valeurs des puissances relatives E$^{ij}$.

Avantageusement, on peut pondérer ces valeurs prises par les valeurs des puissances relatives E$^{ij}$ afin d'obtenir un écart plus grand entre les valeurs E$^{ij}$ proches de zéro et celles plus éloignées de zéro.

En effet, on peut appliquer une fonction non linéaire (notée f) sur les puissances relatives E$^{ij}$ pour former des puissances relatives pondérées (notées f(E$^{ij}$)). Cette fonction f peut correspondre à une exponentiation de l'opposé, une racine nième, une élévation à une puissance nième, une toute autre fonction "sous-linéaire" ou "sur-linéaire", ou toute combinaison de ces fonctions.

Ensuite, on calcule un écart relatif par rapport à une valeur minimale (notée f(E$^{ij}$)min) de ces puissances relatives pondérés f(E$^{ij}$). Finalement, on peut comparer cet écart avec un seuil de précision déterminé (noté s) pour trouver le sous-ensemble de points de localisation {M$_\beta$} définissant la zone de localisation du terminal 7.

Avantageusement, on peut calculer un écart relatif normalisé. Dans ce cas, on peut affirmer qu'un point de référence M$_\alpha$ appartient au sous-ensemble de points de localisation U$_\beta$={M$_\beta$} si l'équation suivante est vérifiée :

$$\frac{f(E^{ij}) - f(E^{ij})\min}{f(E^{ij})\min} \leq s$$

Ainsi, en localisant deux sondes 9a et 9b, on obtient pour chaque point M$_\alpha$ de l'ensemble de points de référence {M$_\alpha$}, une équation de puissance relative. Ceci permet de déterminer un sous-ensemble de points de localisation U$\beta$.

Bien entendu, on peut localiser plus que deux sondes et dans ce cas, on obtient plusieurs sous-ensembles de points de localisation. A titre d'exemple, lorsqu'on localise trois sondes 9a, 9b, et 9c de positions respectives Si , Sj et Sk, on associe à chacun des points de référence M$_\alpha$ trois atténuations de puissance A(Si, M$_\alpha$), A(Sj, M$_\alpha$), et A(Sk, M$_\alpha$) correspondant à ces trois positions Si , Sj et Sk.

Cependant, les sondes 9a, 9b, et 9c peuvent être associées entre elles deux à deux pour former trois couples de deux sondes. Ainsi, on peut associer à chacun des points de référence M$_\alpha$ trois couples de première et deuxième atténuations de puissance formés à partir des atténuations de puissance A(Si, M$_\alpha$), A(Sj, M$_\alpha$), et A(Sk, M$_\alpha$).

De même, les puissances de réception NPi, NPj, et NPk mesurées par les trois sondes 9a, 9b, et 9c respectivement peuvent être associées entre elles deux à deux pour former un ensemble de couples de première et deuxième puissances de réception.

Ainsi, pour une pluralité de sondes, on peut toujours associer à chacun des points de référence M$_\alpha$ une pluralité de première et deuxième atténuations de puissance et une pluralité de première et deuxième puissances de réception.

Par conséquent, pour chaque point M$_\alpha$ de l'ensemble de points de référence {M$_\alpha$}, on peut déterminer une pluralité d'équations de puissance relative (E$^{ij}$)$_{ij}$, une équation pour chaque paire de puissances de réception. Chaque équation définit un sous-ensemble de points de localisation U$_\beta$. Ainsi, on détermine une pluralité de sous-ensembles de points de localisation U=(U$_\beta$)$_\beta$.

En effet, chaque sous-ensemble de points de localisation U$_\beta$ peut être déterminé en minimisant la puissance relative E$^{ij}$ correspondante de chaque équation en utilisant par exemple la fonction de pondération f. Bien entendu, on peut retenir qu'une partie de ces équations pour déterminer une partie de la pluralité de sous-ensembles de points de localisation U=(U$_\beta$)$_\beta$.

Cependant, on peut augmenter la précision de la localisation du terminal 7 en réduisant la pluralité de sous-ensembles de points de localisation U=(U$_\beta$)$_\beta$ en un unique sous-ensemble de points de localisation U$_\beta$.

Dans ce cas, on calcule une distance relative (notée d$_{\alpha\beta}$=d(M$_\alpha$, U$_\beta$)) entre chacun des points de référence {M$_\alpha$}

et chacun de la pluralité de sous-ensembles de points de localisation U=(U$_\beta$)$_\beta$. Ainsi, on forme une pluralité de distances relatives (d$_{\alpha\beta}$)$_{\alpha\beta}$ correspondant à l'ensemble de points de référence {M$_\alpha$} et à la pluralité de sous-ensembles de points de localisation U=(U$_\beta$)$_\beta$.

A titre d'exemple, la distance d(M$_\alpha$, U$_\beta$) entre un point de référence M$_\alpha$ et un sous-ensemble de points de localisation U$_\beta$ peut être défini comme suit :

$$d(M_\alpha, U_\beta) = \min_{P \in U_\beta} d(M_\alpha, P).$$

En outre, on calcule pour chacun des points de référence {M$_\alpha$}, une distance globale ou indice (noté K(M$_\alpha$)) en fonction de la pluralité de distances relatives (d$_{\alpha\beta}$)$_{\alpha\beta}$. A titre d'exemple, la distance globale K(M$_\alpha$) pour chaque point M$_\alpha$ peut être défini comme suit :

$$K(M_\alpha) = \sqrt{\sum_{U_\beta \in U} d(M_\alpha, U_\beta)^2}$$

Ainsi, une distance globale K(M$_\alpha$) est calculée entre chaque point de référence M$_\alpha$ et un ensemble U formé par la pluralité de sous-ensembles de points de localisation (U$_\beta$)$_\beta$. Par conséquent, on forme une pluralité de distances globales correspondant à l'ensemble de points de référence {M$_\alpha$}.

Ensuite, on calcule un écart de distance par rapport à une distance globale minimale (notée Kmin) de l'ensemble de distances globales et on compare cet écart de distance avec une valeur de résolution déterminée (notée W) pour trouver l'unique sous-ensemble de points de localisation U$_\beta$ définissant la zone de localisation du terminal 7.

Avantageusement, on peut calculer un écart de distance normalisé. Dans ce cas, on peut affirmer qu'un point de référence M$_\alpha$ appartient au sous-ensemble de points de localisation U$_\beta$ (c'est-à-dire que M$_\alpha$ correspond à la position T du terminal 7 avec un maximum de vraisemblance) si l'équation suivante est vérifiée :

$$\frac{K(M_\alpha) - K\min}{K\min} \leq W$$

Par ailleurs, on notera que la localisation de toute nouvelle sonde insérée ou comprise dans la région géographique 1 peut être réalisée par les première et deuxième sondes 9a et 9b déjà localisées.

Ainsi, lors de l'insertion d'une nouvelle sonde dans le système 11 de détermination d'une zone de localisation du terminal 7, il n'est pas nécessaire de mesurer et de relever la position exacte de la nouvelle sonde dans la région géographique 1, car sa localisation peut être réalisée automatiquement par les sondes 9a et 9b déjà en présence.

Selon un exemple particulier de l'invention, on peut placer dans les différents bâtiments 3a à 3c du site 3, des sondes Wi-Fi 9a à 9c de type WRT54g reliées à des prises réseau.

Le procédé de détermination d'une zone de localisation d'un terminal 7 peut être implémenté sur un ordinateur qui correspond au centre de calcul 21.

En outre, on peut choisir une carte du site indiquant l'emplacement des bâtiments 3a à 3c (par exemple, une affichette indiquant les consignes de sécurité et conduite à tenir en cas d'incendie).

On peut scanner cette carte pour obtenir par exemple une image du site de 640*480 pixels. Ceci permet de créer un fichier de 640*480 points de référence M$_\alpha$, et en chacun de ces points, en s'aidant de la carte, on peut indiquer si ce point est à l'intérieur ou à l'extérieur d'un bâtiment.

De même, en s'aidant de la carte, on peut indiquer la position d'au moins deux sondes 9a et 9b ou éventuellement chacune des sondes 9a à 9c.

On notera que les positions des sondes recevant un signal peuvent être numérotées de manière consécutive S1,...,Si, Si+1,...Sn où n correspond au nombre de sondes 9a à 9c (selon l'exemple de la figure 1, n=4).

Une fois que la cartographie et la discrétisation du site 3 sont achevées, on peut calculer les atténuations de puissance.

Pour une sonde déterminée de position Si, et pour chacun des points M$_\alpha$, on calcule l'atténuation de puissance selon l'équation suivante :

$$A(Si, M) = 35\log(d) - 0.12 * 13\left(\sum\nolimits_{k=1}^{N} dk\right)$$

avec ici dk la longueur de bâtiment que doit parcourir l'onde lors d'un trajet rectiligne pour relier les points Si et $M_\alpha$.

Ainsi, on peut maintenant déterminer la zone de localisation d'un terminal 7. En effet, lorsque les sondes repèrent un terminal Wi-Fi possédant une adresse MAC que l'on souhaite localiser, ces dernières envoient des messages au centre de calcul 21 contenant l'adresse MAC du terminal 7, ainsi que les puissances de réceptions NP (ou indicateurs de puissance du signal radio reçu).

Parmi toutes les puissances de réception NP reçues correspondant à l'adresse MAC que l'on souhaite localiser, on peut choisir de ne retenir que la puissance de réception maximale pour chacune des sondes.

Avantageusement, on peut associer les puissances de réception par des couples de première et deuxième puissances de réception comportant des puissances de réception NPi et NPi+1 mesurées par deux sondes dont les positions sont numérotées de manière consécutive Si et Si+1.

Ainsi, pour chaque point $M_\alpha$, on peut ne retenir que les équations de la forme suivante :

$$E_\alpha = NP_i - Np_{i+1} + A(S_i, M_\alpha) - A(S_{j+1}, M_\alpha).$$

Par ailleurs, on peut appliquer sur les puissances relatives, une fonction non linéaire de la forme f(x) = exp(-$x^2$) et on peut choisir un seuil de précision ayant pour valeur s = 0.01

Ainsi, pour chacune de ces équations, on effectue le calcul suivant :

$$f(E_\alpha) = \exp(NP_i - Np_{i+1} + A(S_i, M_\alpha) - A(S_{j+1}, M_\alpha))^2.$$

Par conséquent, un point de référence $M_\alpha$ appartient à un sous-ensemble de points de localisation $U_\beta=\{M_\beta\}$ si l'équation suivante est vérifiée :

$$\frac{f(E^{ij}) - f(E^{ij})\min}{f(E^{ij})\min} \leq 0{,}01$$

Ensuite, on calcule pour chaque équation de puissance relative (c'est-à-dire, pour chaque sous-ensemble de points de localisation $\{M_\beta\}$), l'indice $K(M_\alpha)$ à chaque point $M_\alpha$.

Ainsi, en choisissant une valeur de résolution W=0.05, on peut affirmer qu'un point de référence $M_\alpha$ correspond à la position T du terminal 7 avec un maximum de vraisemblance si l'équation suivante est vérifiée :

$$\frac{K(M_\alpha) - K\min}{K\min} \leq 0{,}05$$

L'invention vise aussi un programme d'ordinateur téléchargeable depuis un réseau de communication comprenant des instructions de code de programme pour l'exécution des étapes du procédé de détermination d'une zone de localisation d'un terminal selon l'invention lorsqu'il est exécuté sur un ordinateur. Ce programme d'ordinateur peut être stocké sur un support lisible par ordinateur et peut être exécutable par un microprocesseur.

En effet, le système de la figure 2 peut correspondre à un système informatique qui peut être utilisé pour exécuter le programme d'ordinateur pour la mise en oeuvre du procédé de détermination d'une zone de localisation d'un terminal.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Avantageusement, le procédé selon l'invention peut être utilisé pour la détection d'intrusion d'un utilisateur d'un terminal extérieur à la région géographique déterminée.

## Revendications

**1.** Procédé de détermination d'une zone de localisation d'un terminal (7) par rapport à une région géographique déterminée, ledit terminal étant apte à communiquer sans fil, procédé dans lequel :

- on représente ladite région géographique (1) déterminée par un ensemble de points de référence ($M_\alpha$),
- on localise au moins deux sondes (9a, 9b), et
- on associe à chacun desdits points de référence ($M_\alpha$) au moins des première et deuxième atténuations de puissance ($A(Si, M_\alpha)$, $A(Sj, M_\alpha)$) correspondant auxdites au moins deux sondes (9a, 9b),

pour un terminal (7) émettant un signal capté par lesdites au moins deux sondes :

- on mesure par lesdites au moins deux sondes au moins des première et deuxième puissances de réception ($NPi$, $NPj$) correspondant audit signal émis par ledit terminal, et
- on détermine, parmi l'ensemble de points de référence ($M_\alpha$), au moins un sous-ensemble de points ($M_\beta$), dit sous-ensemble de points de localisation, proches du terminal (7), au moyen de puissances relatives ($E^{ij}$) associées à chacun desdits points de référence ($M_\alpha$), une puissance relative ($Eij$) associée à un point de référence ($M_\alpha$) étant égale à la différence ($Eij=NPi-NPj+A(Si, M_\alpha)-A(Sj, M_\alpha)$) entre lesdites au moins première et deuxième puissances de réception ($NPi$, $NPj$) plus la différence entre lesdites au moins première et deuxième atténuations de puissance ($A(Si, M_\alpha)$, $A(Sj, M_\alpha)$), et en ce qu'on détermine ledit au moins sous-ensemble de points de localisation en minimisant lesdites puissances relatives, ledit sous-ensemble de points de localisation ($M_\beta$) définissant ladite zone de localisation du terminal,

et pour trouver ledit au moins sous-ensemble de points de localisation:

- on applique une fonction non linéaire sur lesdites puissances relatives pour former des puissances relatives pondérées,
- on calcule un écart relatif par rapport à une valeur minimale desdites puissances relatives pondérées, et
- on compare ledit écart avec un seuil de précision déterminé pour trouver ledit au moins sous-ensemble de points de localisation définissant ladite zone de localisation du terminal.

**2.** Procédé selon la revendication 1, **caractérisé en ce que** au moins une partie desdites au moins première et deuxième atténuations de puissance ($A(Si, M_\alpha)$, $A(Sj, M_\alpha)$) est obtenue par une mesure physique.

**3.** Procédé selon la revendication 1 ou la revendication 2, **caractérisé en ce qu'**une atténuation de puissance entre un point de référence $M_\alpha$ et une sonde déterminée parmi lesdites au moins deux sondes ayant une position Si est calculée en fonction du milieu k traversé, d'un nombre N de milieux rencontrés, d'une longueur dk que doit parcourir une onde en ligne droite dans le milieu k pour joindre ladite sonde depuis ledit point de référence $M_\alpha$, d'un facteur d'atténuation Ak du milieu k, selon l'équation suivante :

$$A(Si, M_\alpha) = \sum_{k=1}^{N} 10 * Ak * \log(dk).$$

**4.** Procédé selon la revendication 1 ou la revendication 2, **caractérisé en ce qu'**une atténuation de puissance entre un point de référence $M_\alpha$ et une sonde déterminée parmi lesdites au moins deux sondes ayant une position Si est calculée en fonction d'une distance d entre ladite sonde déterminée et ledit point de référence, d'un facteur d'atténuation de l'air libre Aair, d'un nombre N de bâtiments traversés, d'un indice du bâtiment k, d'une longueur dk que doit parcourir une onde en ligne droite dans ledit bâtiment pour joindre ladite sonde déterminée depuis ledit point de référence, d'un facteur d'atténuation d'un mur Amur, d'une densité linéique $\mu$ d'un mur dans d'un bâtiment $k_{bat}$, selon une équation d'approximation suivante :

$$A(Si, M_\alpha) \approx Aair \log(d) - \mu Amur \left( \sum_{k=1}^{Nb} dk \right).$$

**5.** Procédé selon l'une quelconque des revendications 1 à 4, dans lequel on localise au moins trois sondes, **caractérisé en ce que** les puissances de réception mesurées par lesdites au moins trois sondes sont associées entre elles deux à deux pour former un ensemble de couples de première et deuxième puissances de réception dont au moins une partie est retenue pour déterminer une pluralité de sous-ensembles de points de localisation.

**6.** Procédé selon la revendication 5, **caractérisé en ce que** pour trouver un unique sous-ensemble de points de localisation:

- on calcule une distance relative entre chacun desdits points de référence et chacun de ladite pluralité de sous-ensembles de points de localisation pour former une pluralité de distances relatives correspondant audit ensemble de points de référence et à ladite pluralité de sous-ensembles de points de localisation,
- on calcule pour chacun desdits points de référence une distance globale en fonction de ladite pluralité de distances relatives entre ledit point de référence et un ensemble formé par ladite pluralité de sous-ensembles de points de localisation pour former une pluralité de distances globales correspondant audit ensemble de points de référence,
- on calcule un écart de distance par rapport à une distance globale minimale dudit ensemble de distances globales, et
- on compare ledit écart de distance avec une valeur de résolution déterminée pour trouver ledit unique sous-ensemble de points de localisation définissant ladite zone de localisation du terminal.

**7.** Procédé selon l'une des revendications 1 à 6, **caractérisé en ce que** la localisation d'une nouvelle sonde insérée dans ladite région géographique déterminée est réalisée par lesdites au moins première et deuxièmes sondes.

**8.** Procédé selon l'une quelconque des revendications 1 à 7, **caractérisé en ce que** ladite région géographique comporte un site comprenant au moins une borne d'accès Wi-Fi et **en ce que** ledit terminal est apte à communiquer selon un protocole de type Wi-Fi.

**9.** Système de détermination d'une zone de localisation d'un terminal (7) par rapport à une région géographique (1) déterminée, ledit terminal étant apte à communiquer sans fil, **caractérisé en ce qu'**il comporte :

- des moyens de représentation (13) pour représenter ladite région géographique (1) déterminée par un ensemble de points de référence ($M_\alpha$),
- des moyens de localisation (14) pour localiser au moins deux sondes (9a, 9b), et
- des moyens d'association (15) pour associer à chacun desdits points de référence ($M_\alpha$) au moins des première et deuxième atténuations de puissance ($A(Si, M_\alpha)$, $A(Sj, M_\alpha)$) correspondant auxdites au moins deux sondes,
- des moyens de mesure (17) pour mesurer au moins des première et deuxième puissances de réception (NPi, NPj) correspondant à un signal émis par ledit terminal et capté par lesdites au moins deux sondes, et
- des moyens de détermination (19) pour déterminer, parmi l'ensemble de points de référence, au moins un sous-ensemble de points ($M_\beta$), dit sous-ensemble de points de localisation, proches du terminal (7), au moyen de puissances relatives ($E^{ij}$) associées à chacun desdits points de référence, une puissance relative (Eij) associée à un point de référence ($M_\alpha$) étant égale à la différence ($Eij = NPi - NPj + A(Si, M_\alpha) - A(Sj, M_\alpha)$) entre lesdites au moins première et deuxième puissances de réception (NPi, NPj) plus la différence entre lesdites au moins première et deuxième atténuations de puissance ($A(Si, M_\alpha)$, $A(Sj, M_\alpha)$), ledit au moins sous-ensemble de points de localisation étant déterminé en minimisant lesdites puissances relatives, ledit sous-ensemble de points de localisation ($M_\beta$) définissant ladite zone de localisation du terminal,
- des moyens d'application d'une fonction non linéaire sur lesdites puissances relatives pour former des puissances relatives pondérées,
- des moyens de calcul d'un écart relatif par rapport à une valeur minimale desdites puissances relatives pondérées, et
- des moyens de comparaison dudit écart avec un seuil de précision déterminé pour trouver ledit au moins sous-ensemble de points de localisation définissant ladite zone de localisation du terminal.

10. Programme d'ordinateur téléchargeable depuis un réseau de communication et/ou stocké sur un support lisible par ordinateur et/ou exécutable par une puce électronique comprenant des instructions de code de programme pour l'exécution des étapes du procédé de détermination d'une zone de localisation d'un terminal par rapport à une région géographique déterminée selon au moins l'une des revendications 1 à 8, lorsqu'il est exécuté sur un ordinateur.

11. Utilisation du procédé selon l'une quelconque des revendications 1 à 8, pour la détection d'intrusion d'un utilisateur d'un terminal extérieur à ladite région géographique déterminée.

## Claims

1. Method for determining a zone of location of a terminal (7) with respect to a determined geographical region, said terminal being able to communicate wirelessly, **characterized in that**:

   - said determined geographical region (1) is represented by a set of reference points ($M_\alpha$),
   - at least two probes (9a, 9b) are located, and
   - at least first and second power attenuations (A (Si, $M_\alpha$), A (Sj, $M_\alpha$)) corresponding to said at least two probes (9a, 9b) are associated with each of said reference points ($M_\alpha$),

   for a terminal (7) emitting a signal sensed by said at least two probes:

   - at least first and second reception powers (NPi, NPj) corresponding to said signal emitted by said terminal are measured by said at least two probes, and
   - at least one subset of points ($M_\beta$), termed the subset of location points which are chose to the terminal (7), is determined from among the set of reference points ($M_\alpha$) by means of relative powers ($E^{ij}$) associated with each of said reference points ($M_\alpha$), a relative power (Eij) associated with a reference point ($M_\alpha$) being equal to the difference (Eij=NPi-NPj+A(Si, $M_\alpha$)-A(Sj, $M_\alpha$)) between said at least first and second reception powers (NPi, NPj) plus the difference between said at least first and second power attenuations (A(Si, $M_\alpha$), A(Sj, $M_\alpha$)), and **in that** said at least one subset of location points is determined by minimizing said relative powers, said subset of location points ($M_\beta$) defining said zone of location of the terminal,

   and in order to find said at least one subset of location points:

   - a non-linear function is applied to said relative powers so as to form weighted relative powers,
   - a relative discrepancy with respect to a minimum value of said weighted relative powers is calculated, and
   - said discrepancy is compared with a determined precision threshold so as to find said at least one subset of location points defining said zone of location of the terminal.

2. Method according to Claim 1, **characterized in that** at least one part of said at least first and second power attenuations (A(Si, $M_\alpha$), A(Sj, $M_\alpha$) ) is obtained through a physical measurement.

3. Method according to Claim 1 or Claim 2, **characterized in that** a power attenuation between a reference point $M_\alpha$ and a probe determined from among said at least two probes having a position Si is calculated as a function of the medium k crossed, of a number N of media encountered, of a length dk that a wave must traverse in a straight line in the medium k so as to reach said probe from said reference point $M_\alpha$, of an attenuation factor Ak of the medium k, according to the following equation:

$$A(Si, M_\alpha) = \sum_{k=1}^{N} 10 * Ak * \log(dk).$$

4. Method according to Claim 1 or Claim 2, **characterized in that** a power attenuation between a reference point M, and a probe determined from among said at least two probes having a position Si is calculated as a function of a distance d between said determined probe and said reference point, of an attenuation factor of the free air Aair, of a number N of buildings crossed, of an index of the building k, of a length dk that a wave must traverse in a straight line in said building so as to reach said determined probe from said reference points, of an attenuation factor of a wall Amur, of a lineal density $\mu$ of a wall in a building $k_{bat}$, according to a following approximation equation:

$$A(Si, M_\alpha) \approx Aair \log(d) - \mu Amur\left(\sum_{k=1}^{Nb} dk\right)$$

5. Method according to any one of Claims 1 to 4, in which at least three probes are located, **characterized in that** the reception powers measured by said at least three probes are inter-associated pairwise so as to form a set of pairs of first and second reception powers of which at least part is retained so as to determine a plurality of subsets of location points.

6. Method according to Claim 5, **characterized in that** to find a unique subset of location points:

   - a relative distance between each of said reference points and each of said plurality of subsets of location points is calculated so as to form a plurality of relative distances corresponding to said set of reference points and to said plurality of subsets of location points,
   - for each of said reference points a global distances is calculated as a function of said plurality of relative distances between said reference point and a set formed by said plurality of subsets of location points so as to form a plurality of global distances corresponding to said set of reference points,
   - a distance discrepancy with respect to a minimum global distance of said set of global distances is calculated, and
   - said distance discrepancy is compared with a determined resolution value so as to find said unique subset of location points defining said zone of location of the terminal.

7. Method according to one of Claims 1 to 6, **characterized in that** the location of a new probe inserted into said determined geographical region is carried out by said at least first and second probes.

8. Method according to any one of Claims 1 to 7, **characterized in that** said geographical region comprises a site comprising at least one Wi-Fi access post and **in that** said terminal is able to communicate according to a protocol of Wi-Fi type.

9. System for determining a zone of location of a terminal (7) with respect to a determined geographical region (1), said terminal being able to communicate wirelessly, **characterized in that** it comprises:

   - representation means (13) for representing said determined geographical region (1) by a set of reference points ($M_\alpha$),
   - location means (14) for locating at least two probes (9a, 9b), and
   - association means (15) for associating with each of said reference points ($M_\alpha$) at least first and second power attenuations ($A(Si, M_\alpha)$, $A(Sj, M_\alpha)$) corresponding to said at least two probes,
   - measurement means (17) for measuring at least first and second reception powers (NPi, NPj) corresponding to a signal emitted by said terminal and sensed by said at least two probes, and
   - determination means (19) for determining, from among the set of reference points, at least one subset of points ($M_\beta$), termed the subset of location points, that are close to the terminal (7), by means of relative powers ($E^{ij}$) associated with each of said reference points, a relative power (Eij) associated with a reference point ($M_\alpha$) being equal to the difference ($Eij=NPi-NPj+A(Si, M_\alpha)-A(Sj, M_\alpha)$) between said at least first and second reception powers (NPi, NPj) plus the difference between said at least first and second power attenuations ($A(Si, M_\alpha)$, $A(Sj, M_\alpha)$), said at least one subset of location points being determined by minimizing said relative powers, said subset of location points ($M_\beta$) defining said zone of location of the terminal,
   - means for applying a non-linear function to said relative powers so as to form weighted relative powers,
   - means for calculating a relative discrepancy with respect to a minimum value of said weighted relative powers, and
   - means for comparing said discrepancy with a determined precision threshold so as to find said at least one subset of location points defining said zone of location of the terminal.

**10.** Computer program downloadable from a communication network and/or stored on a support readable by computer and/or executable by an electronic chip comprising program code instructions for the execution of the steps of the method for determining a zone of location of a terminal with respect to a determined geographical region according to at least one of Claims 1 to 8, when it is executed on a computer.

**11.** Use of the method according to any one of Claims 1 to 8, for the detection of intrusion of a user of a terminal outside said determined geographical region.

**Patentansprüche**

**1.** Verfahren zur Bestimmung einer Lokalisierungszone eines Endgeräts (7) bezüglich einer bestimmten geographischen Region, wobei das Endgerät drahtlos kommunizieren kann, Verfahren, bei dem:

- die bestimmte geographische Region (1) durch eine Einheit von Bezugspunkten ($M_\alpha$) dargestellt wird,
- mindestens zwei Sonden (9a, 9b) lokalisiert werden, und
- jedem der Bezugspunkte ($M_\alpha$) mindestens erste und zweite Leistungsdämpfungen ($A(Si, M_\alpha)$, $A(Sj, M_\alpha)$) zugeordnet werden, die den mindestens zwei Sonden (9a, 9b) entsprechen,

für ein Endgerät (7), das ein Signal sendet, welches von den mindestens zwei Sonden aufgefangen wird:

- durch die mindestens zwei Sonden mindestens erste und zweite Empfangsleistungen (NPi, NPj) gemessen werden, die dem vom Endgerät gesendeten Signal entsprechen, und
- unter der Einheit von Bezugspunkten ($M_\alpha$) mindestens eine Untereinheit von Punkten ($M_\beta$), Lokalisierungspunkte-Untereinheit genannt, die dem Endgerät (7) nahe sind, mittels relativer Leistungen ($E^{ij}$) bestimmt wird, die jedem der Bezugspunkte ($M_\alpha$) zugeordnet sind, wobei eine einem Bezugspunkt ($M_\alpha$) zugeordnete relative Leistung ($E^{ij}$) gleich der Differenz ($E^{ij}=NPi-NPj+A(Si, M_\alpha) -A (Sj, M_\alpha)$) zwischen dem mindestens ersten und zweiten Empfangsleistungen (NPi, NPj) plus die Differenz zwischen den mindestens ersten und zweiten Leistungsdämpfungen {$A(Si, M_\alpha)$, $A(Sj , M_\alpha)$ ist, und dass die mindestens eine Untereinheit von Lokalisierungspunkten bestimmt wird, indem die relativen Leistungen minimiert werden, wobei die Untereinheit von Lokalisierungspunkten ($M_\beta$) die Lokalisierungszone des Endgeräts definiert,

und um die mindestens eine Untereinheit von Lokalisierungspunkten zu finden:

- eine nichtlineare Funktion an die relativen Leistungen angewendet wird, um gewichtete relative Leistungen zu formen,
- eine relative Abweichung bezüglich eines Mindestwerts der gewichteten relativen Leistungen berechnet wird, und
- die Abweichung mit einer bestimmten Präzisionsschwelle verglichen wird, um die mindestens eine Untereinheit von Lokalisierungspunkten zu finden, die die Lokalisierungszone des Endgeräts definiert.

**2.** Verfahren nach Anspruch 1, **dadurch gekennzeichnet, dass** mindestens ein Teil der mindestens ersten und zweiten Leistungsdämpfungen ($A(Si, M_\alpha)$, $A(Sj, M_\alpha)$) durch eine physikalische Messung erhalten wird.

**3.** Verfahren nach Anspruch 1 oder Anspruch 2, **dadurch gekennzeichnet, dass** eine Leistungsdämpfung zwischen einem Bezugspunkt $M_\alpha$ und einer bestimmten Sonde unter den mindestens zwei Sonden, die eine Position Sei hat, abhängig vom durchquerten Milieu k, von einer Anzahl N von angetroffenen Milieus, einer Länge dk, die eine Welle in gerader Linie im Milieu k durchlaufen muss, um vom Bezugspunkt $M_\alpha$ zur Sonde zu kommen, von einem Dämpfungsfaktor Ak des Milieus k gemäß der folgenden Gleichung berechnet wird:

$$A\left(Si, M_\alpha\right) = \sum_{k=1}^{N} 10 * Ak * \log\left(dk\right).$$

**4.** Verfahren nach Anspruch 1 oder Anspruch 2, **dadurch gekennzeichnet, dass** eine Leistungsdämpfung zwischen einem Bezugspunkt $M_\alpha$ und einer bestimmten Sonde unter den mindestens zwei Sonden, die eine Position Si hat, abhängig von einem Abstand d zwischen der bestimmten Sonde und dem Bezugspunkt, von einem Dämpfungsfaktor der Außenluft Aair, von einer Anzahl N von durchquerten Gebäuden, von einem Index des Gebäudes k, von einer Länge dk, die eine Welle in gerader Linie im Gebäude durchlaufen muss, um vom Bezugspunkt zur bestimmten Sonde zu kommen, von einem Dämpfungsfaktor einer Mauer Amur, von einer längenbezogenen Dichte $\mu$ einer Mauer in einem Gebäude $k_{bat}$ gemäß einer folgenden Näherungsgleichung berechnet wird:

$$A(Si, M_{\alpha}) = Aair \log(d) - \mu Amur\left(\sum_{k=1}^{Nb} dk\right).$$

5. Verfahren nach einem der Ansprüche 1 bis 4, bei dem mindestens drei Sonden lokalisiert werden, **dadurch gekennzeichnet, dass** die von den mindestens drei Sonden gemessenen Empfangsleistungen untereinander paarweise zugeordnet werden, um eine Einheit von Paaren erster und zweiten Empfangsleistungen zu formen, von mindestens ein Teil zurückbehalten wird, um eine Vielzahl von Untereinheiten von Lokalisierungspunkten zu bestimmen.

6. Verfahren nach Anspruch 5, **dadurch gekennzeichnet, dass** zum Finden einer einzigen Untereinheit von Lokalisierungspunkten:

   - ein relativer Abstand zwischen jedem der Bezugspunkte und jeder der Vielzahl von Untereinheiten von Lokalisierungspunkten berechnet wird, um eine Vielzahl von relativen Abständen zu formen, die der Einheit von Bezugspunkten und der Vielzahl von Untereinheiten von Lokalisierungspunkten entsprechen,
   - für jeden der Bezugspunkte ein globaler Abstand abhängig von der Vielzahl von relativen Abständen zwischen dem Bezugspunkt und einer von der Vielzahl von Untereinheiten von Lokalisierungspunkten gebildeten Einheit berechnet wird, um eine Vielzahl von globalen Abständen zu formen, die der Einheit von Bezugspunkten entspricht,
   - eine Abstandsabweichung bezüglich eines globalen Mindestabstands der Einheit von globalen Abständen berechnet wird, und
   - die Abstandsabweichung mit einem bestimmten Auflösungswert verglichen wird, um die einzige Untereinheit von Lokalisierungspunkten zu finden, die die Lokalisierungszone des Endgeräts definiert.

7. Verfahren nach einem der Ansprüche 1 bis 6, **dadurch** gekennzeichet, dass die Lokalisierung einer neuen in die bestimmte geographische Region eingeführten Sonde durch die mindestens ersten und zweiten Sonden durchgeführt wird.

8. Verfahren nach einem der Ansprüche 1 bis 7, **dadurch gekennzeichnet, dass** die geographische Region einen Standort aufweist, der mindestens einen WiFi-Zugang enthält, und dass das Endgerät gemäß einem Protokoll vom Typ WiFi kommunizieren kann.

9. System zur Bestimmung einer Lokalisierungszone eines Endgeräts (7) bezüglich einer bestimmten geographischen Region (1), wobei das Endgerät drahtlos kommunizieren kann, **dadurch gekennzeichnet, dass** es aufweist:

   - Darstellungseinrichtungen (13), um die bestimmte geographische Region (1) durch eine Einheit von Bezugspunkten ($M_{\alpha}$) darzustellen,
   - Lokalisierungseinrichtungen (14), um mindestens zwei Sonden (9a, 9b) zu lokalisieren, und
   - Zuordnungseinrichtungen (15), um jedem der Bezugspunkte ($M_{\alpha}$) mindestens erste und zweite Leistungsdämpfungen ($A(Si, M_{\alpha})$, $A(Sj, M_{\alpha})$) zuzuordnen, die den mindestens zwei Sonden entsprechen,
   - Messeinrichtungen (17), um mindestens erste und zweite Empfangsleistungen (NPi, NPj) zu messen, die einem Signal entsprechen, das vom Endgerät gesendet und von den mindestens zwei Sonden aufgefangen wird, und
   - Bestimmungseinrichtungen (19), um unter der Einheit von Bezugspunkten mindestens eine Untereinheit von Punkten ($M_{\beta}$), Untereinheit von Lokalisierungspunkten genannt, nahe dem Endgerät (7) mittels relativer Leistungen ($E^{ij}$) zu bestimmen, die jedem der Bezugspunkte zugeordnet sind, wobei eine einem Bezugspunkt ($M_{\alpha}$) zugeordnete relative Leistung ($E^{ij}$) gleich der Differenz ($E^{ij}=NPi-NPj+A(Si, M_{\alpha})-A(Sj, M_{\alpha})$) zwischen den mindestens ersten und zweiten Empfangsleistungen (NPi, NPj) plus die Differenz zwischen den mindestens ersten und zweiten Leistungsdämpfungen ($A(Si, M_{\alpha})$, $A(Sj, M_{\alpha})$) ist, wobei die mindestens eine Untereinheit von Lokalisierungspunkten bestimmt wird, indem die relativen Leistungen minimiert werden, wobei die Untereinheit von Lokalisierungspunkten (Mβ) die Lokalisierungszone des Endgeräts definiert,

- Einrichtungen zur Anwendung einer nichtlinearen Funktion an die relativen Leistungen, um gewichtete relative Leistungen zu formen,
- Einrichtungen zur Berechnung einer relativen Abweichung bezüglich eines Mindestwerts der gewichteten relativen Leistungen, und
- Einrichtungen zum Vergleich der Abweichung mit einer bestimmten Präzisionsschwelle, um die mindestens eine Untereinheit von Lokalisierungspunkten zu finden, die die Lokalisierungszone des Endgeräts definiert.

10. Computerprogramm, das von einem Kommunikationsnetz heruntergeladen und/oder auf einem computerlesbaren Träger gespeichert und/oder von einem elektronischen Chip ausgeführt werden kann, das Programmcodeanweisungen zur Ausführung der Schritte des Verfahrens zur Bestimmung einer Lokalisierungszone eines Endgeräts bezüglich einer bestimmten geographischen Region nach mindestens einem der Ansprüche 1 bis 8 enthält, wenn es in einem Computer ausgeführt wird.

11. Verwendung des Verfahrens nach einem der Ansprüche 1 bis 8 zur Erfassung eines Eindringens eines Benutzers eines Endgeräts außerhalb der bestimmten geographischen Region.

FIG.1

$\{M_\alpha\}$

$(A(Si\ M_\alpha), A(Sj\ M_\alpha)$

$\downarrow$

$M_\alpha$

22

NP$_i$

17

9a

13

Si , Sj — 14

15

$E_\alpha^{ij} = NPi - NPj + A(Si, M_\alpha) - A(Sj, M_\alpha)$

$\implies \{M_\beta\} \subset \{M_\alpha\}$

19

20

NP$_j$

17

9b

21

**FIG.2**

**FIG.3**

3a

5

S$_i$  9a

d1

3b

d2

W1

d3

d4

W2

3c

d5

T

M$_\alpha$

3

1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040152470 A
- US 2005124354 A
- WO 9913662 A
- US 20060075131 A

**Littérature non-brevet citée dans la description**

- **P.BAHL ; V.PADMANABHAN.** RADAR : An In-Buiding RF-based User Location and Tracking System. *IEEE INFOCOM00,* 2000